# EUROPEAN PATENT APPLICATION

(11) **EP 4 316 234 A2**
(43) Date of publication of application: **07.02.2024**
(21) Application number: 23218444.0
(22) Date of filing: 28.12.2022
(51) Int. Cl.: A01D 45/06

(54) **HARVESTING MACHINE FOR CUTTING OR PULLING OUT PLANT STEMS, METHOD FOR CUTTING OR PULLING OUT PLANT STEMS AND USE FOR CUTTING OR PULLING OUT HEMP**

(30) Priority: 29.12.2021 BE 202106091; 18.11.2022 BE 202205933
(62) Divisional of application: 22850605.1
(71) Applicant: Cretes NV, 8560 Gullegem (BE)
(72) Inventor: VAN PUYVELDE, Dirk, 8560 Gullegem (BE)
(74) Representative: Brantsandpatents bv

(57) **Abstract**

The present invention relates to a harvesting machine, the harvesting machine being movable in a direction of travel, the harvesting machine comprising dividers for guiding plant stems to a cutting means, a picking roller, a picking belt, guide rollers and a front return roller, wherein the picking belt is arranged in a loop around the guide rollers and the front return roller, with two dividers forming a funnel to the picking roller and the picking belt, with the picking belt touching the picking roller, with the axes of the front return roller and the picking roller being parallel, wherein a distance Y between the axis of the front return roller and the picking roller in a direction transverse to the direction of travel is equal to or greater than the sum of the radius of the front return roller and the picking roller, plus a thickness of the picking belt. The invention also relates to a method and a use.

## Description

### TECHNICAL FIELD

The invention relates to a harvesting machine for cutting or pulling out plant stems, and more particularly to guiding plant stems to a cutting or pulling means of the harvesting machine. The invention further relates to a method for cutting plant stems and a use of the harvesting machine or the method for cutting or pulling out of hemp.

### PRIOR ART

It is known from the prior art that certain plants are cultivated for their natural fibers. These natural fibers are then used, for example, for textile or insulation applications. Examples of such plants include flax, hemp, jute, manila hemp, sisal, ramie, nettle, raffia or ficus.

After the plant stems have matured, they are mowed or pulled from the ground using a harvesting machine. For this purpose, the harvesting machine comprises a cutting or pulling means. The plant stems are divided into swaths by means of pointed dividers while the harvesting machine is driven over the ground and guided to a gripping point between a picking belt and a picking roller. In a harvesting machine according to the prior art, the front return roller is always pressed against the picking roller. After cutting or pulling up the plant stems, the plant stems are further discharged by picking belts.

Due to the flexibility of plant stems of especially longer plants, for example plants with stems longer than one meter such as hemp, the stems tend to bend forward upon contact and friction with the dividers. A similar phenomenon occurs when the plant stems approach the gripping point between the picking belt and picking roller. This can cause a chain reaction, with plant stems bending further and further forward as the harvesting machine moves forward. The plant stems increasingly escape the cutting or pulling means and the picking belt, resulting in a failure to mow or pull up the plant stems to a proper length. At worst, the plant stems may bend all the way forward and the harvesting machine may drive over the plant stems and the plant stems will not be mown or pulled up.

AT390862, FR1281756 and GB158322 describe prior art harvesting machines for harvesting flax in which plant stems may bend forward due to contact and friction with the dividers. As a result, these known harvesting machines are less suitable for cutting or pulling up long plant stems.

The present invention aims to solve at least some of the above problems or drawbacks.

### SUMMARY OF THE INVENTION

In a first aspect, the present invention relates to a harvesting machine according to claim 1.

The advantage of this harvesting machine is that the distance between the axis of the front return roller and the picking roller is greater than the sum of the radius of the front return roller and the radius of the picking roller, plus the thickness of the picking belt. This provides a free funnel-shaped access to a plant stalk gripping point between the picking belt and the picking roller. As a result, there is less resistance for the plant stems when approaching the gripping point, so that the plant stems bend forward less when moving the harvesting machine according to the direction of travel and the risk of a chain reaction causing the harvesting machine to drive over the plant stems instead of cutting the plant stems or pulling them up, is greatly reduced.

Preferred embodiments of the harvesting machine are shown in claims 2-10.

A specific preferred embodiment concerns a harvesting machine according to claim 2. An advantage of this embodiment is that the distance Y between the axis of the front return roller and the picking roller, in a direction transverse to the direction of travel, is equal to or greater than the sum of the radius of the front return roller and the radius of the picking roller. As a result, a plant stalk gripping point between the picking belt and the picking roller is freely accessible, viewed against the direction of travel, so that there is less friction between the plant stems themselves and between the plant stems and the dividers when approaching the gripping point, and as a result of which the resistance for the plant stems is reduced even further when approaching the gripping point.

A specific preferred embodiment concerns a harvesting machine according to claim 5.

An advantage of this embodiment is that the entrainment belt or entrainment chain is located partly outside the perimeter of the divider, so that plant stems that come into contact with the divider are carried along by the entrainment belt or entrainment chain to the gripping point between the picking belt and the picking roller. As a result, plant stems encounter less resistance during travel of the harvesting machine in the direction of travel and the plant stems will bend forward even less in the direction of travel, so that the chance of the harvesting machine driving over the plant stems is further reduced.

In a second aspect, the present invention relates to a method according to claim 11. This method has the advantage, among other things, that the plant stems are guided to a plant stalk gripping point between the picking belt and the picking roller, the distance between the axis of the front return roller and the picking roller being greater than the sum of the radius of the front return roller and the picking roller, plus the thickness of the picking belt. As a result, there is a free funnel-shaped access to the plant stalk gripping point between the picking belt and the picking roller, so that the plant stems experience less resistance when approaching the gripping point, so that the plant stems bend forward less during travel of the harvesting machine in the direction of travel. This greatly reduces the chance of the harvesting machine driving over the plant stems instead of cutting or pulling up the plant stems.

Preferred embodiments of the method are described in dependent claims 12-16.

In a third aspect, the present invention relates to a use according to claim 17.

This use results in an advantageous cutting or pulling up of hemp stems. Hemp stems are plants with very long stems up to three meters in length that are also very flexible. When cutting or pulling up hemp stems, there is a real chance that the hemp stems will bend forward in the direction of travel due to resistance when approaching a gripping point between a picking roller and picking belt, and the harvesting machine will drive over the hemp stems instead of cutting or pulling up the hemp stems. By using a harvesting machine according to the present invention or a method according to the present invention, this chance is greatly reduced.

In a fourth aspect, the present invention relates to a harvesting machine according to claim 18.

The advantage of this harvesting machine is that the harvesting machine comprises an entrainment belt or chain, wherein part of the entrainment belt or chain is located outside the perimeter of the divider, so that plant stems that come into contact with the divider are carried by the entrainment belt or entrainment chain to a gripping point between the picking belt and the picking roller. As a result, plant stems encounter less resistance during travel of the harvesting machine in the direction of travel and the plant stems will bend forward less in the direction of travel, so that the chance of the harvesting machine driving over the plant stems is reduced.

### DESCRIPTION OF THE FIGURES

**Figure 1** shows a partial plan view of a prior art harvesting machine.
**Figure 2** shows a partial plan view of a harvesting machine according to an embodiment of the present invention.
**Figure 3** shows a partial plan view of a harvesting machine according to a second embodiment of the present invention.
**Figure 4** shows a partial plan view of a harvesting machine according to a third embodiment of the present invention.
**Figure 5A** shows a detailed view of an entrainment belt and a picking belt of a harvesting machine according to an embodiment of the present invention.
**Figure 5B** shows a cross-sectional view along line A-A of a picking roller of a harvesting machine according to an embodiment of the present invention.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise", "comprising", "consist of", "consisting of", "provided with", "include", "including", "contain", "containing", are synonyms and are inclusive or open terms that indicate the presence of what follows, and which do not exclude or prevent the presence of other components, characteristics, elements, members, steps, as known from or disclosed in the prior art.

Quoting numerical ranges by endpoints includes all integers, fractions and/or real numbers between the endpoints, these endpoints included.

In the context of this document, a wheel and roller are cylindrical bodies rotatable about the cylinder axis and suitable for supporting or guiding a belt or chain. A wheel has a radius greater than the dimension along the cylinder axis. A roller has a radius that is less than or equal to the dimension along the cylinder axis.

A pyramid in this text is a prismatoid consisting of a polygon, regular or irregular, as a base and triangular side faces extending from each of the sides of the polygon to a common point. The common point is a top. A triangular pyramid is a pyramid with a triangle as its base.

In a first aspect, the invention relates to a harvesting machine for cutting or pulling up plant stems.

According to a preferred embodiment, the harvesting machine is movable in a direction of travel. The harvesting machine is a trailed harvesting machine or a self-propelled harvesting machine. The harvesting machine is preferably a self-propelled machine, and the harvesting machine comprises a drive motor as drive for self-propelling the harvesting machine.

The harvesting machine comprises dividers for guiding plant stems to a cutting or pulling means. The dividers comprise a top. The top of the dividers faces in the direction of travel. The dividers are preferably elongated, with the dividers extending in the direction of travel. The dividers are formed by tubes and/or plates and/or other suitable materials. The dividers have an acute-angled triangle as perimeter when projected on a lying plane. Said perimeter of the dividers is preferably isosceles. The dividers may be contained in a volume, such as, for example, a triangular pyramid.

The harvesting machine comprises a picking roller, a picking belt, guide rollers and a front return roller. The picking belt is arranged in a loop around the guide rollers and the front return roller. The picking belt is rotatable. Preferably, the harvesting machine comprises a drive roller for driving the picking belt. The drive roller can be driven by an electric motor, a hydraulic motor or by coupling to a drive motor of the harvesting machine. The picking roller, the guide rollers and the front return roller are preferably drivable by contact with the picking belt. Viewed in the direction of travel, the front return roller is closer to the dividers than the guide rollers. Optionally, the picking belt comprises teeth or a protrusion on a side facing a jacket surface of the front return roller and the front return roller comprises a groove in the jacket surface for receiving the teeth or protrusion. This is advantageous for positioning and maintaining a position of the picking belt on the jacket surface of the front return roller. It will be apparent to one skilled in the art that in this case the guide rollers and any drive roller also comprise a jacket surface with a groove for receiving the teeth or the protrusion. This is also advantageous for positioning and maintaining a position of the picking belt on the guide rollers and any drive roller.

The front return roller comprises an axis and a radius. The picking roller comprises an axis and a radius. The axis of the front return roller and the axis of the picking roller are parallel. The axis of the front return roller preferably lies in a standing plane parallel to the direction of travel. The axis of the picking roller preferably lies in a standing plane parallel to the direction of travel. The picking belt touches the picking roller. This forms a gripping point for gripping the plant stems between the picking belt and the picking roller. Axes of the picking roller and the front return roller that lie in a standing plane parallel to the direction of travel are advantageous for gripping upright plant stems. The axes of the picking roller and the front return roller preferably make an angle with a lying plane, for instance a ground, with the axes of the picking roller and the front return roller inclined from the lying plane in the direction of travel. This is advantageous for carrying along the plant stems in a direction away from the ground by the picking belt after being gripped. Gripping the plant stems is advantageous for controlled cutting of the plant stems by means of the cutting means because the plant stems are held upright during cutting and are pulled against the cutting means by movement of the picking belt. Gripping the plant stems is also advantageous for pulling the plant stems out of a ground. The plant stems are grasped in a substantially standing position and moved against the direction of travel by the picking belt, pulling the plant stems out of the ground and discharging them. Preferably, the axes of the picking roller and the front return roller make an angle with a lying plane in order to pull the plant stems obliquely upwards from the ground. It will be apparent from this description to one skilled in the art that the picking belt and the picking roller can form the pulling means.

Two adjacent dividers form a funnel to the picking roller and picking belt. This is advantageous in ensuring that all plant stems within the funnel formed by two adjacent dividers are gripped by the picking roller and the picking belt and are mowed by the cutting means or pulled out of the ground by the pulling means. The axis of the front return roller is positioned near a first of the two adjacent dividers and the axis of the picking roller is positioned near a second of the two adjacent dividers.

A distance between the axis of the front return roller and the axis of the picking roller is greater than the sum of the radius of the front return roller and the radius of the picking roller, plus a thickness of the picking belt. The thickness of the picking belt is measured perpendicularly from a jacket surface of the front return roller where the picking belt overlies the jacket surface of the front return roller. This means that optional teeth or protrusion, as previously described, are not included in the thickness of the picking belt. Such a distance is advantageous because it provides a free funnel-shaped access to the plant stalk gripping point between the picking belt and the picking roller. As a result, there is less resistance for the plant stems when approaching the gripping point, so that the plant stems bend forward less when moving the harvesting machine according to the direction of travel and the risk of a chain reaction causing the harvesting machine to drive over the plant stems instead of cutting the plant stems or pulling them up, is greatly reduced. This is in contrast to a harvesting machine according to the prior art, in which the front return roller is always pressed against the picking roller and in which the distance between the axis of the front return roller and the axis of the picking roller is equal to the sum of the radius of the front return roller and the radius of the picking roller, plus a thickness of the picking belt. As a result, there is no free funnel-shaped access to the gripping point.

After cutting or pulling up, the plant stems are further discharged by the picking belt. To this end, the harvesting machine comprises a guide plate for clamping plant stems between the guide plate and the picking belt. Preferably, the harvesting machine comprises pairs of picking belts and picking rollers. After gripping of a first part of the plant stems by a first picking belt and a first picking roller of a pair of picking belts and picking rollers and the cutting or pulling up of the first part of the plant stems and after gripping of a second part of the plant stems by a second picking belt and a second picking roller of the pair of picking belts and picking rollers and the cutting or pulling up of the second part of the plant stems, the first part and the second part of the plant stems come together, and the first part and the second part of the plant stems are clamped between the first picking belt and the second picking belt and the first part and the second part of the plant stems are carried along by the first picking belt and the second picking belt. To this end, a part of the first picking belt and the second picking belt are placed parallel next to each other over a length.

According to a preferred embodiment, a distance Y between the axis of the front return roller and the axis of the picking roller in a direction transverse to the direction of travel is equal to or greater than the sum of the radius of the front return roller and the radius of the picking roller. Preferably, the distance Y is equal to or greater than the sum of the radius of the front return roller and the radius of the picking roller, plus the thickness of the picking belt.

This embodiment is advantageous because the plant stalk gripping point between the picking belt and the picking roller is freely accessible, viewed against the direction of travel, so that there is less friction between the plant stems themselves and between the plant stems and the dividers when approaching the gripping point, and as a result of which the resistance for the plant stems is reduced even further when approaching the gripping point.

According to a preferred embodiment, a smallest angle β from a first line to the direction of travel is at least -10° and at most +45°.

The smallest angle β is preferably at least -7°, more preferably at least -5°, even more preferably at least -2° and even more preferably at least 0°.

The smallest angle β is preferably at most +40°, more preferably at most +35°, even more preferably at most +30° and even more preferably at most +25°.

A positive angle β is in the same sense as a smallest angle α from a second line to the direction of travel.

The first line is in line with a part of the picking belt. Said part of the picking belt connects the front return roller and the picking roller. The second line connects the axis of the front return roller and the axis of the picking roller.

This embodiment is advantageous because the smallest angle β determines to what extent plant stems have to change direction in order to be guided via a funnel-shaped opening formed between the picking belt and the picking roller to the plant stalk gripping point and thus the extent to which the gripping point between the picking belt and the picking roller is more accessible to the plant stems. A large positive smallest angle β is disadvantageous because the plant stems experience a large displacement transverse to the direction of travel. A negative smallest angle β is even more disadvantageous because the plant stems now not only have to be moved in a direction transverse to the direction of travel, but also have to rotate around the front return roller, so that the gripping point between the picking belt and the picking roller is less accessible to the plant stems. Because the smallest angle β is an angle of at least -10° and at most +45°, plant stems must be changed in direction by the dividers more limitedly during guiding in order to end up in the funnel-shaped opening between the picking belt and the picking roller and finally to be gripped in the gripping point by the picking belt and the picking roller and the gripping point is more accessible. As a result, there is less friction between the plant stems themselves and the plant stems and the dividers when approaching the gripping point, so that the plant stems bend forward less and the chance of the harvesting machine driving over the plant stems is greatly reduced. A positive smallest angle β is particularly advantageous because the plant stems do not have to rotate around the front return roller, so that the plant stems experience even less resistance.

According to a preferred embodiment, the axis of the front return roller is located within a divider. The axis of the front return roller is arranged at a distance X from the axis of the picking roller, according to the direction of travel. The distance X is equal to or greater than the sum of the radius of the front return roller and the radius of the picking roller. Preferably, the distance X is equal to or greater than the sum of the radius of the front return roller and the radius of the picking roller, plus a thickness of the picking belt. The picking belt comprises an exterior for contact with the plant stems. The exterior of the picking belt is also the side of the picking belt that touches the picking roller. The picking belt is positioned from the front return roller with at least the outside of the picking belt outside the divider.

This embodiment is advantageous because it allows the picking belt in the funnel formed by two dividers, wherein a first of the two dividers is the divider in which the axis of the front return roller is arranged, to run along part of the first divider. As a result, plant stems are already carried along in the funnel by the picking belt and the friction between the first divider and the plant stems is reduced, so that the plant stems bend forward less and the chance of the harvesting machine driving over the plant stems is greatly reduced.

Preferably, the distance X is at least 20% of a total distance along the direction of travel between the axis of the picking roller and the top of the divider, preferably at least 30%, more preferably at least 35%, even more preferably at least 37.5% and even more preferably at least 40%. This is advantageous because the picking belt runs along a substantial part of the first divider, while the front return roller is positioned maximally within the first divider.

According to a further embodiment, an angle γ between a side of the first divider and a tangent to the exterior of the picking belt at the point where the exterior of the picking belt, viewed against the direction of travel, extends outside the first divider, is at least 105°, preferably at least 115°, more preferably at least 120°, and even more preferably at least 125°. The angle γ lies within the funnel formed by the two dividers. The angle γ is directed to the top of the first divider.

This embodiment is advantageous because it allows a gradual transition of the plant stems from a side of the first divider to the picking belt, so that the plant stems experience less resistance.

Preferably, the front return roller is preferably placed as close as possible to the top of the first divider, while at the same time the angle γ is at least 105°.

According to a preferred embodiment, the harvesting machine comprises an entrainment belt or entrainment chain. The entrainment belt or entrainment chain is arranged in a loop around a front and a rear return wheel. The front return wheel and the rear return wheel each comprise an axis. The axis of the front return wheel and the axis of the rear return wheel are preferably parallel. The axis of the front return wheel and the axis of the rear return wheel are located within or near the base of the same divider. Preferably, at least the front or the rear return wheel is drivable, for instance by an electric motor, by a hydraulic motor, or by coupling to the drive motor of the harvesting machine. A part of the entrainment belt or entrainment chain is located outside a perimeter of said divider. Said part of the entrainment belt or entrainment chain connects the front return wheel and the rear return wheel. Said part of the entrainment belt or entrainment chain is located in the funnel formed by two dividers, wherein a second of the two dividers is said divider, in which the axis of the front return wheel and the axis of the rear return wheel are placed.

An advantage of this embodiment is that plant stems which come into contact with the second divider are carried along by the entrainment belt or entrainment chain to the gripping point between the picking belt and the picking roller. As a result, plant stems encounter less resistance during travel of the harvesting machine in the direction of travel and the plant stems will bend forward even less in the direction of travel, so that the chance of the harvesting machine driving over the plant stems is further reduced.

The first divider in this embodiment is a standard divider, but can also be according to a previously described embodiment, wherein the axis of the front return roller is placed inside the first divider, and wherein the axis of the front return roller is positioned at a distance X according to the direction of travel from the axis of the picking roller.

According to a further embodiment, the rear return wheel and the picking roller are combined. In this embodiment the rear return wheel is preferably drivable by contact with the picking belt. This embodiment is advantageous because it does not require a specific rear return wheel, which saves both on components and on weight. This embodiment is also advantageous because plant stems are smoothly transferred from the entrainment belt or entrainment chain to the picking roller, so that resistance when gripping the plant stems between the picking belt and the picking roller is reduced.

According to a further embodiment, the picking roller comprises a jacket surface. There is a recess in the jacket surface for the entrainment belt or entrainment chain. The entrainment belt or entrainment chain lies in the recess around the picking roller. The recess forms the rear return wheel for the entrainment belt or chain. A surface of the entrainment belt or entrainment chain in the recess is at most equal to or lower than the jacket surface of the picking roller. Said surface of the entrainment belt or entrainment chain is directed at the funnel formed by two dividers. This embodiment is advantageous because the entrainment belt or entrainment chain does not protrude from the jacket surface of the picking roller, so that the picking belt continues to touch the jacket surface of the picking belt, without being pushed away from it by the entrainment belt or entrainment chain. As a result, plant stems are gripped over a full height of the picking roller between the picking roller and the picking belt, and not just at the level of the entrainment belt or entrainment chain.

According to a preferred embodiment, the entrainment belt is a toothed belt. Teeth of the toothed belt face the picking belt. A toothed belt is advantageous for improved entrainment of the plant stems by the belt due to an increased uneven contact surface. Preferably, the teeth of the toothed belt are at most equal to or lower than the jacket surface of the picking roller, as in a previously described embodiment. Preferably, the toothed belt is a toothed V-belt. The toothed V-belt comprises teeth on a first side of the toothed V-belt and a V-shaped surface on a second side of the toothed V-belt. The second side is opposite the first side. Teeth of the toothed V-belt are directed towards the picking belt as previously described. The V-shaped surface is directed towards the front return wheel and the rear return wheel. A toothed V-belt is advantageous for automatically centering the toothed V-belt in a groove in the front return wheel and the rear return wheel, preventing the toothed V-belt from slipping off the front return wheel or the rear return wheel, if at all. In a previously described embodiment in which the rear return wheel is the picking roller, said groove is the recess in the picking roller.

According to an alternative embodiment, the entrainment chain comprises protrusions transverse to the surface of the entrainment chain. The protrusions are advantageous for improved entrainment of the plant stems by the entrainment chain through an increased uneven contact surface. Preferably, the protrusions of the entrainment chain are at most equal to or lower than the jacket surface of the picking roller, as in a previously described embodiment.

According to a preferred embodiment, a bisector of a smallest angle λ between a third line and a first line makes a smallest angle θ of at least -15° and at most +15° from the bisector to the direction of travel.

The smallest angle θ is preferably at least -10°, more preferably at least -8°, even more preferably at least -6° and even more preferably at least -5°.

The smallest angle θ is preferably at most +10°, more preferably at most +8°, even more preferably at most +6° and even more preferably at most +5°.

A positive angle θ is in the same sense as the smallest angle λ from the third line to the first line.

The first line is in line with a part of the picking belt. Said part of the picking belt connects the front return roller and the picking roller. The third line is in line with the part of the entrainment belt or entrainment chain which is located outside the perimeter of said divider. This is the said part of the entrainment belt or entrainment chain that is located in the funnel formed by two dividers, as in a previously described embodiment.

This embodiment is advantageous because the smallest angle λ defines a funnel-shaped opening formed between the picking belt and the picking roller to the plant stalk gripping point. Because the bisector of the smallest angle λ makes a smallest angle θ of at least -15° and at most +15° with the direction of travel, plant stems must be changed very little in direction by the dividers during guiding in order to end up in the funnel-shaped opening between the picking belt and the picking roller and finally to be gripped in the gripping point by the picking belt and the picking roller. As a result, there is very little friction between the plant stems themselves and the plant stems and the dividers when approaching the gripping point, so that the plant stems bend forward less and the chance of the harvesting machine driving over the plant stems is greatly reduced.

According to a further embodiment, the smallest angle λ is at least 12° and at most 35°.

The smallest angle λ is preferably at least 13°, more preferably at least 15°, even more preferably at least 17° and even more preferably at least 19°.

The smallest angle λ is preferably at most 32°, more preferably at most 29°, even more preferably at most 26° and even more preferably at most 23°.

A smallest angle λ within the given range is advantageous because the funnel-shaped opening is sufficiently narrow so that plant stems can be successfully gripped between the picking belt and the picking roller at the gripping point and sufficiently wide not to cause great friction between plant stems when approaching the gripping point.

According to a preferred embodiment, the axis of the front return roller is placed within a first divider, the axis of the front return roller being placed at a distance X from the axis of the picking roller according to the direction of travel, and the axis of the front and rear return wheel of the entrainment belt or entrainment chain is located within a second divider. The first and second dividers are adjacent to each other. The part of the jacket surface of the front return roller that is positioned outside the divider faces a side of the second divider. The part of the entrainment belt or entrainment chain that is located outside the perimeter of the second divider faces a side of the first divider. The gripping point between the picking belt and the picking roller is located between the first divider and the second divider.

This embodiment combines advantages of a previously described embodiment in which the axis of the front return roller is placed within a divider and a previously described embodiment in which the axis of the front and rear return wheel is located within a divider. This embodiment has the additional advantage that the angle λ is smaller compared to an embodiment in which the front return roller is not placed inside the first divider.

In a second aspect, the invention relates to a method for cutting or pulling up plant stems.

According to a preferred embodiment, the method comprises the steps of:
- driving a harvesting machine in a direction of travel over a ground with plant stems;
- guiding the plant stems between dividers to a cutting or pulling means;
- cutting or pulling up the plant stems using a picking belt and a picking roller.

The harvesting machine is a trailed harvesting machine or is a self-propelled harvesting machine.

The picking belt is arranged in a loop around guide rollers and a front return roller. The picking belt is rotatable. Preferably, the harvesting machine comprises a drive roller for driving the picking belt. The drive roller can be driven by an electric motor, a hydraulic motor or by coupling to a drive motor of the harvesting machine. The picking roller, the guide rollers and the front return roller are preferably drivable by contact with the picking belt. Viewed in the direction of travel, the front return roller is closer to the dividers than the guide rollers.

The front return roller comprises an axis and a radius. The picking roller comprises an axis and a radius. The axis of the front return roller and the axis of the picking roller are parallel. The axis of the front return roller preferably lies in a standing plane parallel to the direction of travel. The axis of the picking roller preferably lies in a standing plane parallel to the direction of travel. The picking belt touches the picking roller. This forms a gripping point for gripping the plant stems between the picking belt and the picking roller.

Two adjacent dividers form a funnel to the picking roller and picking belt.

A distance between the axis of the front return roller and the axis of the picking roller is greater than the sum of the radius of the front return roller and the radius of the picking roller, plus a thickness of the picking belt. The thickness of the picking belt is measured perpendicularly from a jacket surface of the front return roller where the picking belt overlies the jacket surface of the front return roller.

This method has the advantage, among other things, that the plant stems are guided to a plant stalk gripping point between the picking belt and the picking roller, wherein there is a free funnel-shaped access to the plant stalk gripping point between the picking belt and the picking roller, so that the plant stems experience less resistance when approaching the gripping point, so that the plant stems bend forward less during travel of the harvesting machine in the direction of travel. This greatly reduces the chance of the harvesting machine driving over the plant stems instead of cutting or pulling up the plant stems.

According to a preferred embodiment, a distance Y between the axis of the front return roller and the axis of the picking roller in a direction transverse to the direction of travel is equal to or greater than the sum of the radius of the front return roller and the radius of the picking roller. Preferably, the distance Y is equal to or greater than the sum of the radius of the front return roller and the radius of the picking roller, plus the thickness of the picking belt.

This embodiment is advantageous because the plant stalk gripping point between the picking belt and the picking roller is freely accessible, viewed against the direction of travel, so that there is less friction between the plant stems themselves and between the plant stems and the dividers when approaching the gripping point, and as a result of which the resistance for the plant stems is reduced even further when approaching the gripping point.

According to a preferred embodiment, during guiding between two dividers to a cutting or pulling means on a side of a first divider according to the direction of travel, the plant stems are carried along by the picking belt from a distance X from an axis of the picking roller. The distance X is equal to or greater than the sum of the radius of the front return roller and the radius of the picking roller. Preferably, the distance X is equal to or greater than the sum of the radius of the front return roller and the radius of the picking roller, plus a thickness of the picking belt.

This embodiment is advantageous because plant stems in a funnel formed by two dividers, of which the first divider is one of the two dividers, are already carried along by the picking belt, which reduces the friction between the first divider and the plant stems and causes the plant stems to bend forward less and the chance of the harvesting machine driving over the plant stems is greatly reduced.

Preferably, the distance X is at least 20% of a total distance along the direction of travel between the axis of the picking roller and the top of the first divider, preferably at least 30%, more preferably at least 35%, even more preferably at least 37.5% and even more preferably at least 40%. This is advantageous because the picking belt runs along a substantial part of the first divider, while the front return roller is positioned maximally within the first divider.

According to a preferred embodiment, plant stems are carried along by an entrainment belt or entrainment chain on a side of a second divider while being guided between two dividers to a cutting or pulling means. The entrainment belt or entrainment chain is arranged in a loop around a front return wheel and a rear return wheel. Part of the entrainment belt or entrainment chain is located in a funnel formed by two dividers, the second divider being one of the two dividers. The front return wheel and the rear return wheel each comprise an axis. The axis of the front return wheel and the axis of the rear return wheel are preferably parallel. The axis of the front return wheel and the axis of the rear return wheel are located within the second divider. Preferably, at least the front or rear return wheel is driven, for instance by an electric motor, by a hydraulic motor or by the engine of the harvesting machine.

An advantage of this embodiment is that plant stems which come into contact with the second divider are carried along by the entrainment belt or entrainment chain to the gripping point between the picking belt and the picking roller. As a result, plant stems encounter less resistance during travel of the harvesting machine in the direction of travel and the plant stems will bend forward even less in the direction of travel, so that the chance of the harvesting machine driving over the plant stems is further reduced.

According to a further embodiment, the rear return wheel is combined with the picking drum. In this embodiment the rear return wheel is preferably driven by contact with the picking belt.

This embodiment is advantageous because it does not require a specific rear return wheel, which saves both on components and on weight of the harvesting machine. This embodiment is also advantageous because plant stems are smoothly transferred from the entrainment belt or entrainment chain to the picking roller, so that resistance when gripping the plant stems between the picking belt and the picking roller is reduced.

According to a further embodiment, the plant stems are transferred to the picking roller and picking belt during the guiding of the entrainment belt or entrainment chain. The picking roller comprises a jacket surface. There is a recess in the jacket surface for the entrainment belt or entrainment chain. The entrainment belt or entrainment chain lies in the recess around the picking roller. The recess forms the rear return wheel for the entrainment belt or chain. A surface of the entrainment belt or entrainment chain in the recess is at most equal to or lower than the jacket surface of the picking roller. Said surface of the entrainment belt or entrainment chain is directed at the funnel formed by two dividers.

This embodiment is advantageous because the entrainment belt or entrainment chain does not protrude from the jacket surface of the picking roller, so that the picking belt continues to touch the jacket surface of the picking belt, without being pushed away from it by the entrainment belt or entrainment chain. As a result, during the transfer from the entrainment belt or entrainment chain to the picking roller and picking belt, plant stems are gripped over a full height of the picking roller between the picking roller and the picking belt, and not only at the level of the entrainment belt or entrainment chain. As a result, plant stems are better gripped and the chance that the plant stems bend forward during cutting according to the direction of travel and that the harvesting machine drives over the plant stems is reduced.

One skilled in the art will appreciate that a method according to the second aspect is preferably carried out with a harvesting machine according to the second aspect and that a harvesting machine according to the first aspect is preferably configured for carrying out a method according to the second aspect. Each feature described in this document, both above and below, can therefore relate to any of the three aspects of the present invention.

In a third aspect, the invention relates to a use of a harvesting machine according to the first aspect or a method according to the second aspect for cutting or pulling up hemp stems.

This use results in an advantageous cutting or pulling up of hemp stems. Hemp stems are plants with very long stems up to three meters in length that are also very flexible. When cutting or pulling up hemp stems, there is a real chance that the hemp stems will bend forward in the direction of travel when approaching a gripping point between a picking roller and picking belt due to mutual friction and due to friction with the dividers, and that the harvesting machine will drive over the hemp stems instead of cutting or pulling up the hemp stems. By using a harvesting machine according to the present invention or a method according to the present invention, this chance is greatly reduced.

In a fourth aspect, the invention relates to a harvesting machine for cutting or pulling up plant stems.

According to a preferred embodiment, the harvesting machine is movable in a direction of travel, wherein the harvesting machine comprises dividers for guiding plant stems to a cutting or pulling means, a picking roller, a picking belt, guide rollers and a front return roller, wherein the picking belt is arranged in a loop around the guide rollers and the front return roller, with two dividers forming a funnel to the picking roller and the picking belt, with the picking belt touching the picking roller, with the front return roller and the picking roller comprising an axis and a radius, with the axes of the front return roller and the picking roller being parallel, the harvesting machine comprising an entrainment belt or entrainment chain, the entrainment belt or chain being arranged in a loop around a front and a rear return wheel, the front and rear return wheel comprising an axis, the axis of the front and rear return wheel being located within the same divider, wherein part of the entrainment belt or entrainment chain is located outside a perimeter of said divider, and wherein said part of the entrainment belt or entrainment chain connects the front and rear return wheels.

The advantage of this harvesting machine is that the harvesting machine comprises an entrainment belt or chain, wherein part of the entrainment belt or chain is located outside the perimeter of the divider, so that plant stems that come into contact with the divider are carried by the entrainment belt or entrainment chain to a gripping point between the picking belt and the picking roller. As a result, plant stems encounter less resistance during travel of the harvesting machine in the direction of travel and the plant stems will bend forward less in the direction of travel, so that the chance of the harvesting machine driving over the plant stems is reduced.

One skilled in the art will appreciate that a harvesting machine according to the fourth aspect can be combined with one or more embodiments of a harvesting machine according to the first aspect, even if the distance between the axis of the front return roller and the axis of the picking roller is smaller than or equal to the sum of the radius of the front return roller and the radius of the picking roller, plus a thickness of the picking belt.

In what follows, the invention is described by way of non-limiting figures illustrating the invention, and which are not intended to and should not be interpreted as limiting the scope of the invention.

### DESCRIPTION OF THE FIGURES

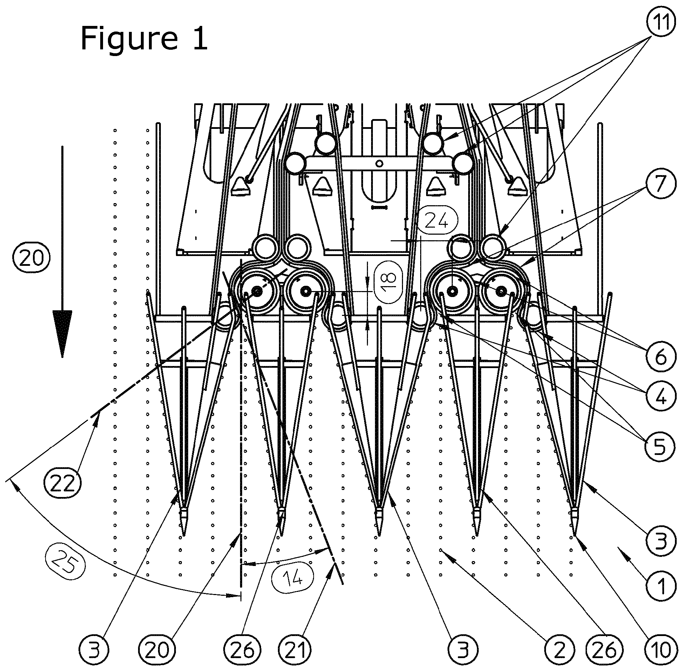

**Figure 1** shows a partial plan view of a prior art harvesting machine.

The harvesting machine drives in a direction of travel (20) over a ground with plant stems (1). The direction of travel (20) is indicated with an arrow in Figure 1. The plant stems (2) are arranged in rows parallel to the direction of travel (20) on the ground with plant stems (1). It will be apparent to one skilled in the art that the plant stems (1) may also be arranged in rows perpendicular to or at an angle to the direction of travel (20). The harvesting machine comprises dividers (3). The dividers (3) comprise a top (10). The top (10) faces in the direction of travel (20). Two adjacent dividers (3) form a funnel to a picking roller (6) and a picking belt (7). The picking belt (7) touches the picking roller (6). This forms a gripping point (5) for gripping the plant stems (2) between the picking belt (7) and the picking roller (6). The plant stems (2) are divided into swaths with the aid of the dividers (3) while the harvesting machine is driven over the ground with plant stems (1) and guided to the gripping point (5). The picking belt (7) is arranged in a loop around guide rollers (11) and a front return roller (4). Only part of the loop is visible in Figure 1. The picking belt (7) is rotatable. Viewed in the direction of travel (20), the front return roller (4) is closer than the guide rollers (11) to the dividers (3). The front return roller (4) and the picking roller (6) each comprise an axis and a radius. The axis of the front return roller (4) and the axis of the picking roller (6) are parallel and lie in a standing plane parallel to the direction of travel (20). In Figure 1 a smallest angle β (14) from a first line (21) to the direction of travel (20) is indicated. The first line (21) is in line with the picking belt (7), with the part of the picking belt (7) connecting the front return roller (4) and the picking roller (6). In this case, the first line (21) is a tangent to the front return roller (4) and the picking roller (6). Figure 1 also shows a smallest angle α (25) from a second line (22) to the direction of travel (20). The second line (22) connects the axis of the front return roller (4) with the axis of the picking roller (6). A positive angle β (14) is in the same sense as the smallest angle α (25). The smallest angle β (14) is -38° in this embodiment.

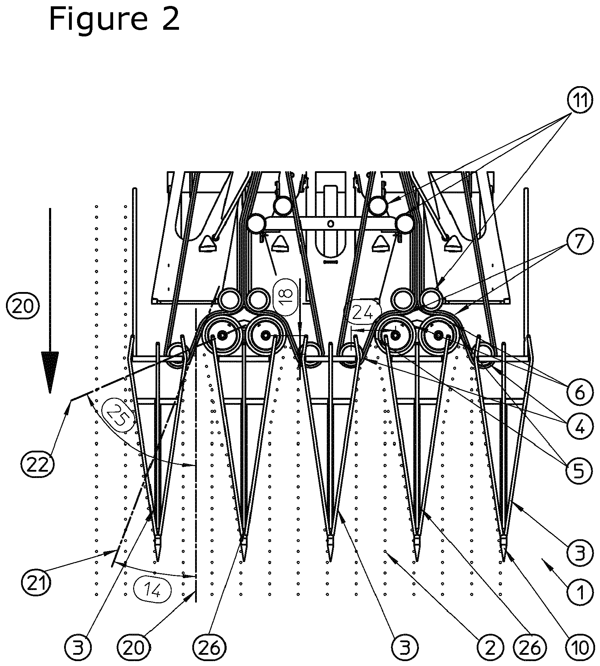

**Figure 2** shows a partial plan view of a harvesting machine according to an embodiment of the present invention.

The harvesting machine is very similar to the prior art harvesting machine in Figure 1. In contrast to the prior art harvesting machine, a distance Y between the axis of the front return roller (4) and the axis of the picking roller (6) in a direction transverse to the direction of travel (20) is greater than the sum of the radius of the front return roller (4) and the radius of the picking roller (6). As a result, the plant stems (2) gripping point (5) between the picking belt (7) and the picking roller (6) is freely accessible, viewed against the direction of travel (20). The smallest angle β (14) is 20° in this embodiment.

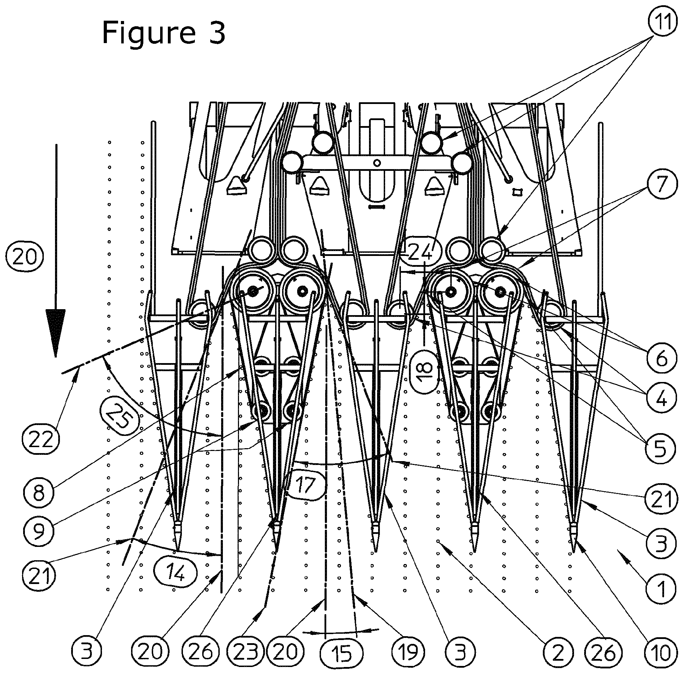

**Figure 3** shows a partial plan view of a harvesting machine according to a second embodiment of the present invention.

The harvesting machine is very similar to the harvesting machine in Figure 2. The harvesting machine further comprises an entrainment belt or entrainment chain (8). The entrainment belt or entrainment chain (8) is arranged in a loop around a front return wheel (9) and the picking roller (6). The front return wheel (9) comprises an axis. The axis of the front return wheel (9) and the axis of the picking roller (6) are parallel. Part of the entrainment belt or entrainment chain (8) is located outside a perimeter of a second divider (26). Said part of the entrainment belt or entrainment chain (8) connects the front return roller (9) and the picking roller (6). Said part of the entrainment belt or entrainment chain (8) is located in the funnel formed by two dividers (3). The picking roller (6) comprises a jacket surface. There is a recess (12) in the jacket surface for the entrainment belt or entrainment chain (8). The recess (12) is not visible in Figure 3. In Figure 3 a smallest angle λ (17) between a third line (23) and the first line (21) is indicated. The first line (21) is in line with a part of the picking belt (7), with the part of the picking belt (7) connecting the front return roller (4) and the picking roller (6). The third line (23) is in line with the part of the entrainment belt or entrainment chain (8) which is located outside the perimeter of the second divider (26). The smallest angle λ (17) is 33° in this embodiment. A bisector (19) divides the smallest angle λ (17) into two equal angles. The bisector (19) makes a smallest angle θ (15) from the bisector (19) to the direction of travel (20). A positive angle θ (15) is in the same sense as the smallest angle λ (17) from the third (23) line to the first line (21). The smallest angle θ (15) is 5° in this embodiment. The smallest angle β (14) is 22° in this embodiment.

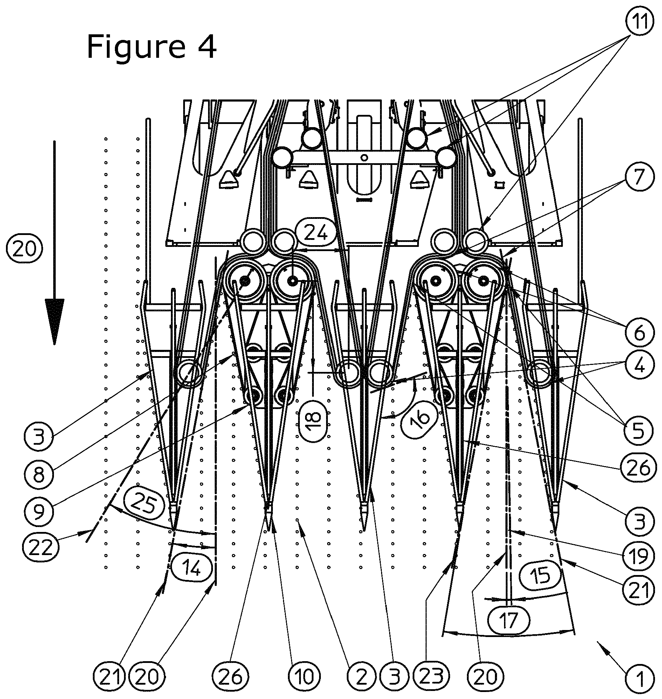

**Figure 4** shows a partial plan view of a harvesting machine according to a third embodiment of the present invention.

The harvesting machine is very similar to the harvesting machine in Figure 3. In this embodiment of the harvesting machine, the axis of the front return roller (4) is located within a first divider (3). The axis of the front return roller (4) is positioned according to the direction of travel (20) at a distance X (18) from the axis of the picking roller (6). The distance X (18) is at least 20% of a total distance according to the direction of travel (20) between the axis of the picking roller (6) and the top (10) of the first divider (3). The picking belt (7) comprises a jacket surface for contact with the plant stems. The exterior of the picking belt (7) is also the side that touches the picking roller (6). The picking belt (7) is positioned, from the front return roller (4), with the exterior outside of the first divider (3). In Figure 4 an angle γ (16) is indicated between a side of the first divider (3) and a tangent on the exterior of the picking belt (7). The tangent is at the point where the exterior of the picking belt (7), seen against the direction of travel (20), ends up outside of the first divider (3). The angle γ (16) is 125° in this embodiment. The smallest angle λ (17) is 22° in this embodiment. The smallest angle θ (15) is -1.5° in this embodiment. The smallest angle β (14) is 10° in this embodiment.

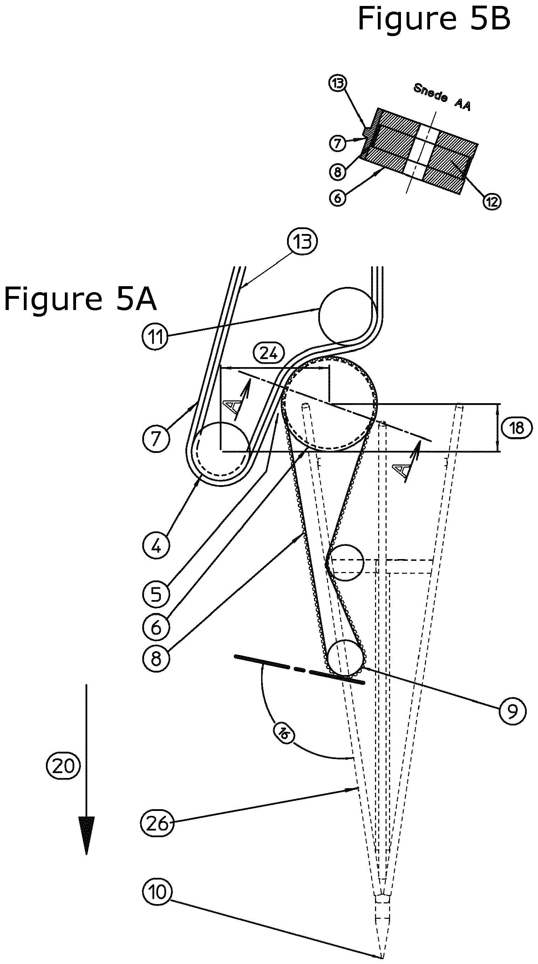

**Figure 5A** shows a detail view of an entrainment belt and a picking belt of a harvesting machine according to an embodiment of the present invention.

The detailed view corresponds to an embodiment as shown in Figure 3. The entrainment belt or entrainment chain (8) is a toothed belt in this embodiment. Figure 5A clearly shows how the toothed belt is placed in a recess (12) in the picking roller (6) and that the teeth of the toothed belt also do not protrude above the jacket surface of the toothed belt. It can also be seen that the picking belt (7) comprises a protrusion (13) on a side facing the front return roller (4). The protrusion (13) runs in a groove on the jacket surface of the front return roller (4).

**Figure 5B** shows a cross-sectional view along line A-A of a picking roller of a harvesting machine according to an embodiment of the present invention.

This embodiment corresponds to an embodiment as shown in Figure 5A. Line A-A is shown in Figure 5A. In Figure 5B the recess (12) for the entrainment belt or entrainment chain (8) is clearly visible. It is also clearly visible that the entrainment belt or entrainment chain (8) does not protrude above the jacket surface of the picking roller (6), so that the picking belt (7) makes contact over the entire height of the picking roller (6).

The numbered elements in the figures are:
1. Ground with plant stems
2. Plant stalk
3. First divider
4. Front return roller
5. Gripping point
6. Picking roller
7. Picking belt
8. Entrainment belt or entrainment chain
9. Front return wheel
10. Top
11. Guide wheel
12. Recess in picking roller
13. Protrusion on picking belt
14. Angle β
15. Angle θ
16. Angle γ
17. Angle λ
18. Distance X
19. Bisector
20. Direction of travel
21. First line
22. Second line
23. Third line
24. Distance Y
25. Angle α
26. Second divider

## Claims

1. Harvesting machine for cutting or pulling out plant stems, the harvesting machine being movable in a direction of travel, wherein the harvesting machine comprises dividers for guiding plant stems to a cutting or pulling means, a picking roller, a picking belt, guide rollers and a front return roller, wherein the picking belt is arranged in a loop around the guide rollers and the front return roller, with two dividers forming a funnel to the picking roller and the picking belt, with the picking belt touching the picking roller, with the front return roller and the picking roller comprising an axis and a radius, with the axes of the front return roller and the picking roller being parallel, **characterized in, that** a distance between the axis of the front return roller and the axis of the picking roller is greater than the sum of the radius of the front return roller and the radius of the picking roller, plus a thickness of the picking belt.

2. Harvesting machine according to claim 1, **characterized in, that** a distance Y between the axis of the front return roller and the axis of the picking roller in a direction transverse to the direction of travel is equal to or greater than the sum of the radius of the front return roller and the radius of the picking roller.

3. Harvesting machine according to claims 1 or 2, **characterized in, that** a smallest angle β from a first line to the direction of travel is at least -10° and at most +45°, a positive angle β being in the same sense as a smallest angle α from a second line to the direction of travel, the first line being in line with a part of the picking belt, the part of the picking belt connecting the front return roller and the picking roller, and the second line connecting the axis of the front return roller and the axis of the picking roller.

4. Harvesting machine according to any of the preceding claims 1-3, **characterized in, that** the axis of the front return roller is placed within a divider, the axis of the front return roller being placed at a distance X from the axis of the picking roller according to the direction of travel, wherein the distance X is equal to or greater than the sum of the radius of the front return roller and the radius of the picking roller, and wherein the picking belt is positioned from the front return roller with at least an exterior of the picking belt outside the divider.

5. Harvesting machine according to any of the preceding claims 1-4, **characterized in, that** the harvesting machine comprises an entrainment belt or entrainment chain, the entrainment belt or chain being arranged in a loop around a front and a rear return wheel, the front and rear return wheel comprising an axis, the axis of the front and rear return wheel being located within the same divider, wherein part of the entrainment belt or entrainment chain is located outside a perimeter of said divider, and wherein said part of the entrainment belt or entrainment chain connects the front and rear return wheels.

6. Harvesting machine according to claim 5, **characterized in, that** the rear return wheel and the picking roller are combined.

7. Harvesting machine according to claim 6, **characterized in, that** the picking roller comprises a jacket surface, wherein the jacket surface comprises a recess for the entrainment belt or entrainment chain, wherein a surface of the entrainment belt or entrainment chain in the recess is at most equal to or lower than the jacket surface of the picking roller.

8. Harvesting machine according to any of the preceding claims 5-7, **characterized in, that** the entrainment belt is a toothed belt.

9. Harvesting machine according to one of the preceding claims 5-8, **characterized in, that** a bisector of a smallest angle λ between a third line and a first line has a smallest angle θ of at least -15° and at most +15° from the bisector to the direction of travel, making a positive angle θ in the same sense as the smallest angle λ from the third line to the first line, the first line being in line with a part of the picking belt, the part of the picking belt connecting the front return roller and the picking roller, and wherein the third line is in line with the part of the entrainment belt or entrainment chain which is located outside the perimeter of said divider.

10. Harvesting machine according to claim 3 and any of the preceding claims 4-8, **characterized in, that** the axis of the front return roller is placed within a first divider and that the axis of the front and rear return wheel are located within a second divider, the first and the second dividers are adjacent to each other, with the part of the jacket surface of the front return roller positioned outside the divider facing a side of the second divider, and with the part of the entrainment belt or entrainment chain extending outside the perimeter of the second divider directed to a side of the first divider.

11. Method for cutting or pulling out plant stems comprising:
- driving a harvesting machine in a direction of travel over a ground with plant stems;
- guiding the plant stems between dividers to a cutting or pulling means;
- cutting or pulling out the plant stems using a picking belt and a picking roller, the picking belt being arranged in a loop around a front return roller and guide rollers and the picking belt touching the picking roller, and with the front return roller and the picking roller comprising an axis and a radius;
**characterized in, that** a distance between the axis of the front return roller and the axis of the picking roller is greater than the sum of the radius of the front return roller and the radius of the picking roller, plus a thickness of the picking belt.

12. Method according to claim 11, **characterized in, that** a distance Y between the axis of the front return roller and the axis of the picking roller in a direction transverse to the direction of travel is equal to or greater than the sum of the radius of the front return roller and the radius of the picking roller.

13. Method according to claim 11 or 12, **characterized in, that** during guiding between two dividers to a cutting or pulling means on a side of a first divider according to the direction of travel, the plant stems are carried along by the picking belt from a distance X from an axis of the picking roller, wherein the distance X is equal to or greater than the sum of the radius of the front return roller and the radius of the picking roller.

14. Method according to any of the preceding claims 11-13, **characterized in, that** plant stems are carried along by an entrainment belt or entrainment chain on a side of the second divider while being guided between two dividers to a cutting or pulling means, the entrainment belt or chain being arranged in a loop around a front and a rear return wheel.

15. Method according to claim 14, **characterized in, that** the rear return wheel is combined with the picking drum, the entrainment belt or chain being driven by the picking roller.

16. Method according to claim 13, **characterized in, that** plant stems are transferred to the picking roller and picking belt during the guiding of the entrainment belt or entrainment chain, wherein the picking roller comprises a jacket surface, wherein the jacket surface comprises a recess for the entrainment belt or entrainment chain, wherein a surface of the entrainment belt or entrainment chain in the recess is at most equal to or lower than the jacket surface of the picking roller.

17. Use of a harvesting machine according to any of claims 1-10 or a method according to any of claims 11-16 for cutting or pulling out hemp stems.

18. Harvesting machine for cutting or pulling out plant stems, the harvesting machine being movable in a direction of travel, wherein the harvesting machine comprises dividers for guiding plant stems to a cutting or pulling means, a picking roller, a picking belt, guide rollers and a front return roller, wherein the picking belt is arranged in a loop around the guide rollers and the front return roller, with two dividers forming a funnel to the picking roller and the picking belt, with the picking belt touching the picking roller, with the front return roller and the picking roller comprising an axis and a radius, with the axes of the front return roller and the picking roller being parallel, **characterized in that** the harvesting machine comprises an entrainment belt or entrainment chain, the entrainment belt or chain being arranged in a loop around a front and a rear return wheel, the front and rear return wheel comprising an axis, the axis of the front and rear return wheel being located within the same divider, wherein part of the entrainment belt or entrainment chain is located outside a perimeter of said divider, and wherein said part of the entrainment belt or entrainment chain connects the front and rear return wheels.
